# EUROPÄISCHE PATENTSCHRIFT

(11) **EP 0 572 838 B1**
(45) Veröffentlichungstag und Bekanntmachung des Hinweises auf die Patenterteilung: **19.03.1997**
(21) Anmeldenummer: 93107867.9
(22) Anmeldetag: 14.05.1993
(51) Int. Cl.: B29C 49/56, B29C 33/22, B29C 45/64

(54) **Formschliesssystem für kunststoffverarbeitende Maschinen**
Mould closing system for plastic material moulding machines
Système de fermeture de moule pour machines de moulage de matières plastiques

(30) Priorität: 03.06.1992 DE 4218261
(43) Veröffentlichungstag der Anmeldung: 08.12.1993
(73) Patentinhaber: BATTENFELD FISCHER BLASFORMTECHNIK GMBH, D-53842 Troisdorf (DE)
(72) Erfinder: Wollschläger, Dieter, Dipl.-Ing., D-5330 Königswinter 41 (DE)
(74) Vertreter: Müller, Gerd, Dipl.-Ing.

(56) Entgegenhaltungen:
- US-A- 3 015 856
- US-A- 3 063 092
- US-A- 3 576 048
- US-A- 4 233 009
- US-A- 4 248 582

## Beschreibung

Den Gegenstand der Erfindung bildet ein Formschließsystem für kunststoffverarbeitende Maschinen, wie z. B. Blasform- und Spritzgießmaschinen, mit einem im wesentlicnen U-förmigen, aus zwei Schenkeln und diese an ihrem einen Ende verbindenden Traverse bestehenden Ständer, zwei jeweils eine Formhälfte tragenden Formträger, die zwischen den beiden Schenkeln des Ständers gegeneinander bewegbar angeordnet sind und beim Schließen hieran ihr Widerlager haben, und mit einer besonderen Führungseinrichtung zum Führen der Formträger parallel zueinander und zur Aufnahme des Gewichtes derselben, wobei diese Führungseinrichtung wenigstens einen zur Bewegungsrichtung der Formträger parallelen Führungsträger enthält, und wobei die Formträger längsbeweglich auf dem Führungsträger abgestützt sind.

Es ist bereits ein Formschließsystem dieser Art durch die DE-PS 20 48 258 bekannt. Dabei hat die zum Führen der Formträger parallel zueinander sowie zur Aufnahme des Gewichtes derselben vorgesehene Führungseinrichtung eine Anordnung zum und eine Verbindung mit dem Ständer, bei welcher sie von dem im Betrieb auftretenden Ständerdeformationen weitgehend unbetroffen ist.

Ein Formschließsystem dieser bekannten Bauart hat zwar den Vorteil, daß die bei der Einleitung der Schließkräfte in die Formträger unvermeidbar auftretenden elastischen Verformungen des Ständers keine nachteiligen Rückwirkungen auf die zusammenarbeitenden Formhälften nehmen können, weil deren gegenseitige Ausrichtung durch die unbeeinflußte Führungseinrichtung erhalten bleibt. Es muß jedoch durch einen relativ hohen konstruktiven bzw. baulichen Aufwand sichergestellt werden, daß die elastische Verformungsfähigkeit des im wesentlichen U-förmigen Ständers noch in erträglichen Grenzen bleibt. Neben einer geeigneten Aufhängung für die unbeeinflußbare Anordnung der Führungsträger sind daher am Ständer auch noch beträchtliche Versteifungsmaßnahmen zu treffen, die eine relativ schwergewichtige Auslegung des gesamten Formschließsystems zur Folge haben.

Auch durch die US-PS 4,248,582 ist eine Formschließvorrichtung bekanntgeworden, welche die eingangs genannte Merkmalsausstattung hat.

Bei ihr besteht die die unteren Enden der beiden Schenkel miteinander verbindende Traverse aus zwei parallelen Holmen, von denen jeder zur Verbindung mit jedem Schenkel zusätzliche Mittel, bspw. Stützanschläge und Verschraubungen benötigt, um eine einwandfrei kraftübertragende Verbindung mit den Schenkeln zu gewährleisten. Auch hier erfordert also der Ständer einen hohen konstruktiven bzw. baulichen Aufwand, um seine elastische Verformungsfähigkeit in den nötigen Grenzen zu halten.

Die Erfindung zielt nun auf die Ausräumung dieser noch bestehenden Unzulänglichkeiten ab. Es liegt ihr deshalb die Aufgabe zugrunde, ein Formschließsystem für kunststoffverarbeitende Maschinen der eingangs angegebenen Art vorzuschlagen, bei dem durch baulich einfache Mittel eine leichte aber trotzdem formsteife Konstruktion ermöglicht wird, die nicht nur wenige Bauteile benötigt, sondern darüberhinaus auch Einbauraum für zusätzliche Vorrichtungen verfügbar macht, ohne die praktische Brauchbarkeit zu beeinträchtigen.

Gelöst wird diese Aufgabe grundsätzlich mit den Erfindungsmerkmalen des Anspruchs 1, nämlich dadurch,
- daß die beiden Schenkel und die Traverse des im wesentlichen U-förmigen Ständers einstückig fest miteinander verbunden sind,
- und daß oberhalb der Traverse, aber unterhalb der Formträger-Widerlager des Ständers als Führungsträger für die Formträger im wesentlichen auf Zug belastete Versteifungsholme eingesetzt sind.

Diese erfindungsgemäße Auslegung eines Formschließsystems hat den beträchtlichen Vorteil, daß die die Gewichtskräfte der Formhälften des Formwerkzeuges tragenden und daher auch auf Biegung belasteten Versteifungsholme den Ständer vorspannen und diesen dadurch ganz wesentlich versteifen. Die gleichzeitige Benutzung der Versteifungsholme zur Lagerung und/oder Führung der Formträger ergibt darüberhinaus ein wenig aufwendiges und damit kostengünstiges Lösungsprinzip. Durch die geringe Anzahl der für den Bau des Formschließsystems benötigten Bauteile wird in vorteilhafter Weise auch Einbauraum für die Unterbringung zusätzlicher Vorrichtungen gewonnen.

Es hat sich erfindungsgemäß besonders bewährt, wenn als Führungsträger zwei Versteifungsholme symmetrisch zur vertikalen Längsmittelebene des Ständers angeordnet sind und wenn darüberhinaus die Versteifungsholme im Ständer unterhalb der Formträger-Widerlager in einem möglichst geringen Höhenabstand zu diesen angeordnet sind. Dabei muß allerdings gewährleistet sein, daß die Holme bei der Transportbewegung am entformten Artikel vorbeifahren können.

Deshalb sollte der Höhenabstand auf die Breite der zum Einsatz gelangenden Formwerkzeuge abgestimmt sein.

Diese Ausgestaltung gewährleistet nicht nur eine optimale Einleitung der Schließkräfte in die Formwerkzeuge, sondern begünstigt darüberhinaus auch die Zugänglichkeit des gesamten Formschließsystems für einen Formwerkzeugwechsel und schafft Platz für unter der Form anzuordnende Vorrichtungen.

Die Arbeitsweise des Formschließsystems kann dadurch weiter optimiert werden, daß die Versteifungsholme etwa auf ihrer halben Länge mit einer zusätzlichen Abstützung auf der Traverse des Ständers ruhen. Hierdurch wird einer übermäßigen Biegeverformung der Versteifungsholme unter der Einwirkung der Gewichtskräfte des Formwerkzeuges entgegengewirkt.

Ein weiterer vorteilhafter Ausbildungsvorschlag liegt erfindungsgemäß darin, daß der Ständer zwei parallele Wangen aufweist, die lediglich in Höhe der Formträger-Widerlager an den Schenkeln sowie im Bereich der Unterkante der Traverse durch Querplatten in starrer Verbindung stehen.

Als besonders bedeutsam hat sich darüberhinaus eine Ausgestaltung erwiesen, nach der der Ständer an seinen Schenkeln, z. B. von den beiden Wangen, jeweils nach entgegengesetzten Seiten abstehende Kragarme aufweist, an denen die Versteifungsholme angreifen. Es können dabei die Versteifungsholme an den Kragarmen jeweils eine Festlagerung haben. In manchen Fällen kann es sich jedoch als vorteilhaft erweisen, wenn die Versteifungsholme an den Kragarmen über Gelenklager angreifen.

In jedem Falle kann eine zweckmäßige erfindungsgemäße Weiterbildung darin gesehen werden, daß die Versteifungsholme aus Rundholmen bestehen, die einen Mittenabstand von der benachbarten Außenseite des Ständers haben, welcher etwa dem Abstand zwischen den beiden Außenseiten des Ständers entspricht. Es hat sich gezeigt, daß in diesem Ausbildungsfall eine besonders hohe Gestaltfestigkeit des gesamten Formschließsystems erreichbar ist. Optimieren läßt sich diese Gestaltfestigkeit des Formschließsystems auch noch dadurch, daß jeder ragarm durch eine horizontale und eine vertikale Stegplatte zusätzlich gegen den ihn tragenden Schenkel des Ständers abgestützt ist und die Formträger-Widerlager an den Schenkeln des Trägers zwischen den beiden Wangen vorgesehen sind.

In der Zeichnung ist ein Ausführungsbeispiel der Erfindung dargestellt. Es zeigen
- Figur 1: ein Formschließsystem für kunststoffverarbeitende Maschinen in der Seitenansicht,
- Figur 2: das Formschließsystem nach Figur 1 in der Draufsicht und
- Figur 3: eine Stirnansicht des Formschließsystems in Pfeilrichtung II der Figuren 1 und 2 gesehen.

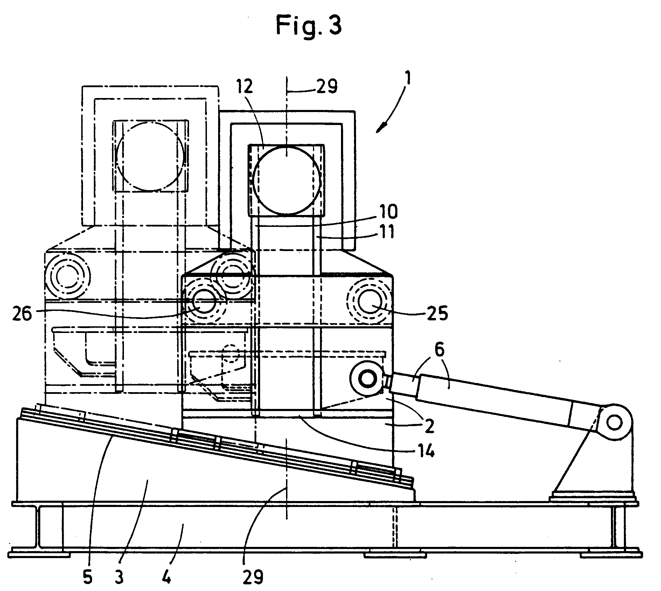

Ein für die Benutzung in Blasformmaschinen oder auch in Spritzgießmaschinen geeignetes Formschließsystem 1 hat einen Ständer 2, der auf Holmen 3 eines Unterbaus 4 ruht, längs denen er, bspw. auf einer geneigten Bahn 5, in mehrere, z. B. drei, verschiedene Stellungen quer zu seiner Längsachse verlagert werden kann. Als Verlagerungsantrieb für den Ständer 2 kann dabei ein Druckmittelzylinder 6 zum Einsatz gelangen, welcher einerseits am Unterbau 4 aufgehängt ist und andererseits am Ständer 2 angreift, wie das die Figur 3 zeigt.

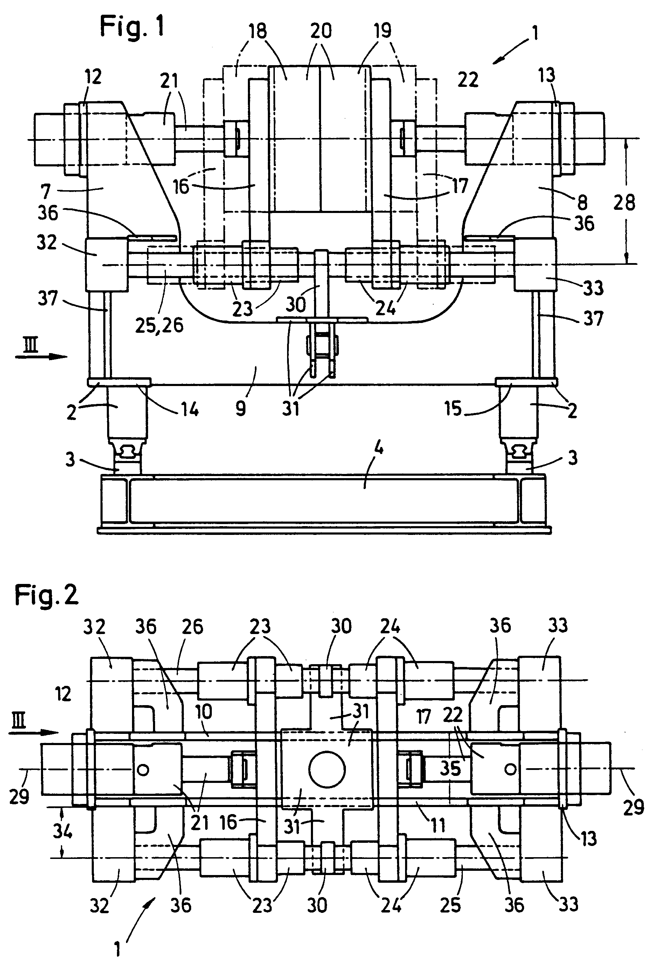

Der Figur 1 kann entnommen werden, daß der Ständer 2 - von der Seite gesehen - eine im wesentlichen U-förmige Gestalt hat, also zwei aufrechte Schenkel aufweist, die durch eine horizontale Traverse 9 einstückig fest miteinander verbunden sind.

In den Figuren 2 und 3 ist zu sehen, daß der Ständer 2 aus zwei parallelen Wangen 10 und 11 zusammengesetzt ist, die jeweils von relativ dicken Blachzuschnitten gebildet werden können. Beide Wangen 10 und 11 sind dabei lediglich bereichsweise, nämlich einerseits nahe den freien Enden ihrer Schenkel 7 und 8 durch eine Querplatte 12 bzw. 13 und andererseits im Bereich der Unterkante der Traverse 9 durch Querplatten 14 und 15 auf Parallelabstand starr miteinander verbunden.

Zwischen den beiden freien Schenkeln 7 und 8 des Ständers 2 ist das Formschließsystem 1 mit den beiden Formträgern 16 und 17 ausgestattet, wobei an jedem derselben eine Formhälfte 18 bzw. 19 eines Formwerkzeuges 20 montiert wird.

Ein Druckmittelantrieb 21, der in der Querplatte 12 am Schenkel 7 des Ständers 2 sein Widerlager hat, greift am Formträger 16 an. Ein entsprechender Druckmittelantrieb 22 hat sein Widerlager in der Querplatte 13 am Schenkel 8 des Ständers 2 und wirkt in entsprechender Weise mit dem Formträger 17 zusammen.

Durch entsprechende Beaufschlagung der Druckmittelantriebe 21 und 22 können die Formträger 16 und 17 in Horizontalrichtung zwischen den Schenkeln 7 und 8 des Ständers 2 verlagert werden, um wahlweise die Formhälften 18 und 19 des Fortwerkzeuges 20 zu öffnen und zu schließen.

Zur Sicherstellung einer ordnungsgemäßen bzw. funktionsnotwendigen Parallelbewegung der beiden Formhälften 18 und 19 des Formwerkzeuges 20 sind die sie haltenden Formträger 16 und 17 bspw. über Gleitmuffen 23 bzw. 24 auf Versteifungsholmen längsverschiebbar geführt. Diese Versteifungsholme 25 und 26 sind dabei als im wesentlichen auf Zug belastete Führungsträger zwischen den beiden Schenkeln 7 und 8 des Ständers 2 eingebaut, und zwar vorzugsweise mit einem auf die Formbreite abgestimmten Abstand 28 zwischen der Kraftachse der Druckmittelantriebe 21 und 22 sowie der Längsachse der Versteifungsholme 25 und 26.

Die Versteifungsholme 25 und 26 sind zwischen den beiden Schenkeln 7 und 8 des Ständers 2 im wesentlichen auf Zug belastet eingebaut und werden darüberhinaus durch die Gewichtskräfte der auf ihnen über die Gleitmuffen 23 bzw. 24 lagernden Formträger 16 und 17 sowie der daran sitzenden Formhälften 18 und 19 auf Biegung beansprucht.

Den Figuren 2 und 3 kann entnommen werden, daß die als Führungsträger benutzten Versteifungsholme 25 und 26 symmetrisch zur vertikalen Längsmittelebene 29-29 des Ständers 2 bzw. des gesamten Formschließsystems 1 angeordnet sind.

Aus den Figuren 1 und 2 ergibt sich darüberhinaus, daß die Versteifungsholme 25 und 26 jeweils etwa auf ihrer halben Länge mit einer zusätzlichen Abstützung 30 auf der Traverse 9 des Ständers 2 ruhen, um dadurch einer übermäßigen Biegeverformung derselben unter der Einwirkung der aus den Formträgern 16 und 17 sowie dem Formwerkzeug 20 resultierenden Gewichtskräfte vorzubeugen.

Die zusätzlichen Abstützungen 30 ruhen dabei auf Tragkonsolen 31, die an der Traverse 9 des Ständers 2 sitzen und seitwärts über die Wangen 10 und 11 des Ständers 2 auskragen.

Der Ständer 2 hat an jedem seiner beiden Schenkel 7 und 8 jeweils nach entgegengesetzten Seiten, z. B. von den beiden Wangen 10 und 11 abstehende Kragarme 32 und 33, an denen die beiden Versteifungsholme 25 und 26 angreifen, wie das insbesondere den Figuren 1 und 2 entnommen werden kann.

Beim gezeigten Ausführungsbeispiel haben dabei die Versteifungsholme 25 und 26 an den Kragarmen 32 und 33 jeweils eine Festlagerung.

Es ist aber auch ohne weiteres möglich, die Versteifungsholme 25 und 26 an den Kragarmen 32 und 33 über Gelenklager angreifen zu lassen, ohne daß sich hierdurch die Funktionsweise wesentlich ändern würde.

Es ist vorgesehen, daß die Versteifungsholme 25 und 26 aus Rundholmen bestehen (vgl. Figur 3), wobei diese einen Mittenabstand 34 von der benachbarten Außenseite des Ständers 2 erhalten können, welcher etwa dem Abstand 35 zwischen den beiden Außenseiten des Ständers 2 entspricht, wie das in Figur 2 der Zeichnung zu sehen ist.

Aus Stabilitätsgründen ist noch vorgeschlagen, jeden Kragarm 32 bzw. 33 durch eine horizontale Stegplatte 36 und eine vertikale Stegplatte 37 zusätzlich gegen den ihn tragenden Schenkel 7 bzw. 8 des Ständers 2 bzw. der Wangen 10 und 11 abzustützen, wie das insbesondere aus den Figuren 1 und 2 ersichtlich ist.

Es sei noch darauf hingewiesen, daß die Führung der beiden Formträger 16 und 17 längs der Versteifungsholme 25 und 26 nicht nur mit Hilfe von Gleitmuffen 23 und 24 erfolgen kann, sondern daß stattdessen auch Wälzkörperführungen und/oder Rollenführungen zum Einsatz gelangen können. Auch beschränkt sich die Erfindung nicht auf eine Anwendung bei Formschließsystemen, wo der Ständer 2 längs einer geneigten Bahn 5 auf einem Unterbau 4 quer verschiebbar geführt wird.

Wesentlich für ein erfindungsgemäßes Formschließsystem 1 ist jedoch, daß auf Zug belastete Versteifungsholme 25 und 26 oberhalb der Traverse 9 des Ständers 2 und unterhalb der Formträger-Widerlager zwischen die Schenkel 7 und 8 des Ständers 2 als Führungsträger eingesetzt sind. Die Gewichtskräfte der hierauf zur Linearführung ruhenden Formträger und des Formwerkzeuges setzen die zugbelasteten Versteifungsholme 25 und 26 zusätzlich einer Biegung aus, wodurch die Vorspannung des Ständers 2 entsprechend erhöht wird.

## Patentansprüche

1. Formschließsystem (1) für kunststoffverarbeitende Maschinen, wie z. B. Blasform- und Spritzgießmaschinen,
- mit einem im wesentlichen U-förmigen, aus zwei Schenkeln (7 und 8) und dieser an ihrem einen Ende verbindenden Traverse (9) bestehenden Ständer (2),
- mit zwei jeweils eine Formhälfte (18 und 19) tragenden Formträgern (16 und 17), die zwischen den beiden freien Schenkeln (7 und 8) des Ständers (2) gegeneinander bewegbar angeordnet sind und beim Schließen hieran ihr Widerlager haben,
- und mit einer besonderen Führungseinrichtung (23 bis 26) zum Führen der Formträger (16 und 17) parallel zueinander und zur Aufnahme des Gewichtes derselben,
- wobei diese Führungseinrichtung (23 bis 26) wenigstens einen zur Bewegungsrichtung der Formträger (16 und 17) parallelen Führungsträger (25 und 26) enthält,
- und wobei die Formträger (16 und 17) längsbeweglich auf dem Führungsträger (25. 26) abgestützt sind (23, 24),
**dadurch gekennzeichnet,**
daß die beiden Schenkel (7 und 8) und die Traverse (9) des Ständers (2) einstückig fest miteinander verbunden sind, und daß dabei oberhalb der Traverse (9), aber unterhalb der Formträger-Widerlager (12 bzw. 13) des Ständers (2) als Führungsträger für die Formträger (16, 17) im wesentlichen auf Zug belastete Versteifungsholme (25, 26) eingesetzt sind.

2. Formschließsystem nach Anspruch 1,
**dadurch gekennzeichnet,**
daß als Führungsträger zwei Versteifungsholme (25 und 26) symmetrisch zur vertikalen Längsmittelebene (29-29) des Ständers (2) angeordnet sind.

3. Formschließsystem nach einem der Ansprüche 1 und 2,
**dadurch gekennzeichnet,**
daß die Versteifungsholme (25, 26) im Ständer (2) unterhalb der Formträger-Widerlager (12 bzw. 13) in einem Abstand (28) zu diesen angreifen, der auf die maximale Breite der zum Einsatz gelangenden Formwerkzeuge (20) abgestimmt ist.

4. Formschließsystem nach einem der Ansprüche 1 bis 3,
**dadurch gekennzeichnet,**
daß die Versteifungsholme (25 und 26) etwa auf ihrer halben Länge mit einer zusätzlichen Abstützung (30, 31) auf der Traverse (9) des Ständers (2) ruhen.

5. Formschließsystem nach einem der Ansprüche 1 bis 4,
**dadurch gekennzeichnet,**
daß der Ständer (2) zwei parallele Wangen (10 und 11) aufweist, die lediglich in Höhe der Formträger-Widerlager an den Schenkeln (7 und 8) sowie im Bereich der Unterkante der Traverse (9) durch Querplatten (12, 13 bzw. 14, 15) in starrer Verbindung stehen.

6. Formschließsystem nach einem der Ansprüche 1 bis 5,
**dadurch gekennzeichnet,**
daß der Ständer (2) an seinen Schenkeln (7 und 8), z. B. von den beiden Wangen (10 und 11), jeweils nach entgegengesetzten Seiten abstehende Kragarme (32 bzw. 33) aufweist, an denen die Versteifungsholme (25 und 26) angreifen.

7. Formschließsystem nach einem der Ansprüche 1 bis 6,
**dadurch gekennzeichnet,**
daß die Versteifungsholme (25 und 26) an den Kragarmen (32 und 33) jeweils eine Festlagerung haben.

8. Formschließsystem nach einem der Ansprüche 1 bis 6,
**dadurch gekennzeichnet,**
daß die Versteifungsholme (25 und 26) an den Kragarmen (32 und 33) über Gelenklager angreifen.

9. Formschließsystem nach einem der Ansprüche 1 bis 8,
**dadurch gekennzeichnet,**
daß die Versteifungsholme (25 und 26) an den Kragarmen (32 und 33) einerseits über eine Festlagerung und andererseits über Gelenklager angreifen.

10. Formschließsystem nach einem der Ansprüche 1 bis 9,
**dadurch gekennzeichnet,**
daß die Versteifungsholme (25 und 26) aus Rundholmen bestehen, die einen Mittenabstand (34) von der benachbarten Außenseite des Ständers (2) haben, welcher etwa dem Abstand (35) zwischen den beiden Außenseiten des Ständers (2) entspricht.

11. Formschließsystem nach einem der Ansprüche 1 bis 10,
**dadurch gekennzeichnet,**
daß jeder Kragarm (32 oder 33) durch eine horizontale Stegplatte (36) und eine vertikale Stegplatte (37) zusätzlich gegen den ihn tragenden Schenkel (7 oder 8) des Ständers (2) abgestützt ist.

12. Formschließsystem nach einem der Ansprüche 1 bis 11,
**dadurch gekennzeichnet,**
daß die Formträger-Widerlager (12 und 13) an den Schenkeln (7 und 8) des Ständers (2) zwischen den beiden Wangen (10 und 11) vorgesehen sind.

## Claims

1. Mould closure system (1) for machines processing plastics material, such as for example blow moulding and injection moulding machines,
- with a substantially U-shaped stand (2) consisting of two limbs (7 and 8) and a cross member (9) connecting these at their one end,
- with two mould carriers (16 and 17) which each carry a respective mould half (18 and 19) and which are arranged between the two free limbs (7 and 8) of the stand (2) to be movable relative to one another and on closing have their counterbearing thereat,
- and with a separate guide equipment (23 to 26) for guidance of the mould carriers (16 and 17) parallel to one another and for acceptance of the weight of the same,
- wherein this guide equipment (23 to 26) comprises at least one guide carrier (25 and 26) parallel to the movement direction of the mould carriers (16 and 17),
- and wherein the mould carriers (16 and 17) are supported (23, 24) to be longitudinally movable on the guide carriers (25, 26),
characterised thereby that the two limbs (7 and 8) and the cross member (9) of the stand (2) are firmly connected together into one part and that in that case bracing beams (25, 26) loaded substantially in tension and above the cross member (9), but below the mould carrier counterbearing (12 or 13) of the stand (2), are used as guide carriers for the mould carriers (16, 17).

2. Mould closure system according to claim 1, characterised thereby that two bracing beams (25 and 26) are arranged as guide carriers symmetrically to the vertical longitudinal centre plance (29-29) of the stand (2).

3. Mould closure system according to one of claims 1 and 2, characterised thereby that the bracing beams (25, 26) in the stand (2) engage below the mould carrier counterbearing (12 or 13) at a spacing (28) therefrom which is matched to the maximum width of the mould tool (20) coming into use.

4. Mould closure system according to one of claims 1 to 3, characterised thereby that the bracing beams (25 and 26) rest on the cross member (9) of the stand (2) over about half their length by an additional support (30, 31).

5. Mould closure system according to one of claims 1 to 4, characterised thereby that the stand (2) comprises two parallel cheeks (10 and 11), which stand in rigid connection merely at the level at the mould carrier counterbearings at the limbs (7 and 8) as well as in the region of the lower edge of the cross member (9) by transverse plates (12, 13 or 14, 15).

6. Mould closure system according to one of claims 1 to 5, characterised thereby that the stand (2) has at its limbs (7 and 8), for example from the two cheeks (10 and 11), cantilever arms (32 or 33) which respectively project to opposite sides and at which the bracing beams (25 and 26) engage.

7. Mould closure system according to one of claims 1 to 6, characterised therby that the bracing beams (25 and 26) have a fixed mounting at the respective cantilever arms (32 and 33).

8. Mould closure system according to one of claims 1 to 6, characterised thereby that the bracing beams (25 and 26) engage at the cantilever arms (32 and 33) by way of universal joints.

9. Mould closure system according to one of claims 1 to 8, characterised thereby that the bracing beams (25 and 26) engage at the cantilever arms (32 and 36) at one end by way of a fixed bearing and at the other end by way of universal joints.

10. Mould closure system according to one of claims 1 to 9, characterised thereby that the bracing beams (25 and 26) consist of round spars, which have from the adjacent side of the stand (2) a centre spacing (34) which approximately corresponds to the spacing (35) between the two outer sides of the stand (2).

11. Mould closure system according to one of claims 1 to 10, characterised thereby that each cantilever arm (32 or 33) is supported by a horizontal web plate (36) and a vertical web plate (37) additionally against the limb (7 or 8), which carries it, of the stand (2).

12. Mould closure system according to one of claims 1 to 11, characterised thereby that the mould carrier counterbearings (12 and 13) are provided at the limbs (7 and 8) of the stand (2) between the two cheeks (10 and 11).

## Revendications

1. Système de fermeture de moules (1) pour des machines de moulage de matières synthétiques, telles que par exemple des machines de moulage à souffler ou des presses par injection,
- présentant un montant (2) essentiellement en forme U, constitué par deux bras (7 et 8) reliés en une de leurs extrémités par une traverse (9),
- présentant deux supports de moule (16 et 17) supportant chacun une moitié de moule (18 et 19), lesdits supports étant disposés de manière à pouvoir être déplacés l'un par rapport à l'autre entre les deux bras (7 et 8) libres du montant (2) et présentant chacun une butée pour la fermeture sur ledit montant,
- et présentant un dispositif de guidage (23 à 26) particulier pour guider les supports de moule (16 et 14) parallèlement l'un par rapport à l'autre et pour reprendre le poids de ceux-ci,
- le dispositif de guidage (23 à 26) comportant au moins un support de guidage (25 et 26) parallèle au sens du déplacement du support de moule (16 et 17),
- le support de moule (16 et 17) étant appuyé (23, 24) sur le support de guidage (25 et 26) de manière à pouvoir se déplacer longitudinalement,
caractérisé en ce que les deux bras (7 et 8) et la traverse (9) du montant (2) sont reliés en une seule pièce et en ce qu'on a placé, au-dessus de la traverse (9) mais au-dessous de la butée (12 ou 13) du support de moule sur le montant (2), comme support de guidage pour les supports de moule (16, 17), des longerons de renfort (25, 26) essentiellement sollicités en traction.

2. Système de fermeture de moules selon la revendication 1, caractérisé en ce qu'on a disposé comme support de guidage deux longerons de renfort (25 et 26), symétriquement par rapport au plan longitudinal vertical médian (29-29) du montant (2).

3. Système de fermeture de moules selon une quelconque des revendications 1 et 2, caractérisé en ce que les longerons de renfort (26, 25) s'agrippent dans le montant (2) au-dessous de la butée (12 ou 13) du support de moule à une distance (28) réglée sur la largeur maximale de l'outil de moulage (20) pouvant être utilisé.

4. Système de fermeture de moules selon une quelconque des revendications 1 à 3, caractérisé en ce que les longerons de renfort (25 et 26) reposent sur environ la moitié de leur longueur, via un support (30, 31) supplémentaire, sur la traverse (9) du montant (2).

5. Système de fermeture de moules selon une quelconque des revendications 1 à 4, caractérisé en ce que le montant (2) présente deux faces (10 et 11) parallèles qui ne sont reliées de manière rigide qu'au niveau de la butée des supports de moules sur les bras (7 et 8) ainsi qu'au niveau de la face inférieure de la traverse (9) à l'aide de plaques transversales (12, 13 ou 14, 15).

6. Système de fermeture de moules selon une quelconque des revendications 1 à 5, caractérisé en ce que le montant (2) présente au niveau de ses bras (7 et 8), par exemple à partir des deux faces (10 et 11), des bras en porte-à-faux (32 ou 33) partant des deux côtés opposés, sur lesquels s'agrippent les longerons de renfort.

7. Système de fermeture de moules selon une quelconque des revendications 1 à 6, caractérisé en ce que les longerons de renfort (25 et 26) sont logés chacun de manière fixe sur les bras en porte-à-faux (32 et 33).

8. Système de fermeture de moules selon une quelconque des revendications 1 à 6, caractérisé en ce que les longerons de renfort (25 et 26) s'agrippent aux bras en porte-à-faux (32 et 33) via des éléments articulés.

9. Système de fermeture de moules selon une quelconque des revendications 1 à 8, caractérisé en ce que les longerons de renfort (25 et 26) s'agrippent aux bras en porte-à-faux (32 et 33), d'une part via un logement fixe et d'autre part via des éléments articulés.

10. Système de fermeture de moules selon une quelconque des revendications 1 à 9, caractérisé en ce que les longerons de renfort (25 et 26) sont constitués par des longerons ronds qui ont une distance médiane (34) par rapport aux côtés extérieurs voisins du montant (2) qui correspond environ à la distance (35) entre les deux côtés extérieurs du montant (2).

11. Système de fermeture de moules selon une quelconque des revendications 1 à 10, caractérisé en ce que chaque bras en porte-à-faux (32 ou 33) est supporté par une tôle horizontale (36) et une tôle verticale (37) par rapport aux bras (7 ou 8) du montant (2) qui les supportent.

12. Système de fermeture de moules selon une quelconque des revendications 1 à 11, caractérisé en ce que les butées (12 et 13) des supports de moule sur les bras (7 et 8) du montant (2) sont prévues entre les deux faces (10 et 11).
